# FASCICULE DE BREVET EUROPEEN

(11) **EP 3 489 429 B1**
(45) Date de publication et mention de la délivrance du brevet: **18.03.2026**
(21) Numéro de dépôt: 18194508.0
(22) Date de dépôt: 14.09.2018
(51) Int. Cl.: E04F 10/10

(54) **PERGOLA EXTENSIBLE**
ERWEITERBARE PERGOLA
EXTENDABLE PERGOLA

(30) Priorité: 22.11.2017 ES 201731350
(43) Date de publication de la demande: 29.05.2019
(73) Titulaire: Producciones Mitjavila, S.A.U., 17730 Girona (ES)
(72) Inventeur: DENNINGER, Morgan, 17730 Girona (ES); MITJAVILA, Raymond, 17730 Girona (ES)
(74) Mandataire: Balder IP Law, S.L.

(56) Documents cités:
- WO-A2-2013/008043
- BE-A4- 1 006 395
- FR-A1- 2 947 845
- JP-A- S57 130 657
- JP-A- S60 223 561
- JP-A- S63 156 154
- JP-U- H0 380 851
- JP-U- S60 157 833

## Description

### DOMAINE DE LA TECHNIQUE

Cette invention relève du domaine technique des pergolas extensibles qui fournissent un espace couvert moyennant l'extension échelonnée de panneaux qui se déplacent sur des rails.

### ÉTAT DE LA TECHNIQUE

L'utilisation de pergolas est répandue pour fournir un toit rétractable dans les zones où l'on veut, d'une part, profiter aussi bien de la lumière que de la chaleur du soleil lorsque la météo est favorable et, d'autre part, se protéger de la pluie ou du propre soleil lorsque celui-ci est trop fort.

On connait de nombreux types de pergolas sur le marché. Certaines comprennent des mécanismes de panneaux coulissants, qui coulissent dans un sens sensiblement parallèle au sol pour couvrir l'espace défini entre plusieurs colonnes. Un exemple de ce type de mécanismes est décrit dans le brevet FR 2891561, dans lequel on peut observer différents panneaux qui coulissent sur des guides pour s'étendre et se replier. JP S57 130657 A décrit aussi un mécanisme similaire constitué de panneaux coulissant.

Il est certain que ce type de mécanismes fonctionne bien mais les panneaux qui y sont utilisés ont des contraintes relatives à leur hauteur, étant donné que, lorsqu'ils sont soumis aux forces de leur poids, de la pluie ou de la neige se posant dessus et au reste de panneaux qui interagissent, ils pourraient fléchir excessivement, rendant le mécanisme inutilisable voire même provoquant le dysfonctionnement total du système.

Il existe des solutions connues qui interposent des colonnes sur le passage des panneaux pour réduire leur longueur équivalente et diminuer la force supportée par chaque portion de panneau. Néanmoins, cette solution présente des problèmes évidents d'utilisation et de commodité, l'espace en dessous des panneaux étant coupé par lesdites colonnes intermédiaires.

### ABRÉGÉ DE L'INVENTION

Pour surmonter les problèmes présentés dans l'état de l'art, l'invention propose une pergola selon la revendication 1. Les revendications dépendantes définissent des réalisations préférées de l'invention.

Dans un premier aspect inventif, l'invention fait référence à une pergola comprenant une pluralité d'éléments coulissants, chaque élément étant constitué d'un panneau à épaisseur constante et d'un cadre de panneau, l'élément étant apte à constituer un élément coulissant dans une pergola, le cadre de panneau comprenant un profilé antérieur, un profilé postérieur, deux profilés latéraux, le panneau étant fixé aux profilés antérieur, postérieur et latéraux. Cet élément a deux caractéristiques essentielles : d'une part, le profilé postérieur, qui a une surface supérieure et une surface inférieure, a une hauteur plus importante que le double de l'épaisseur du panneau. La hauteur du profilé postérieur est définie comme la distance entre la surface supérieure et la surface inférieure, et est mesurée dans le même sens que l'épaisseur du panneau. D'autre part, le panneau est excentré en hauteur par rapport au profilé postérieur.

La nomenclature de « profilé antérieur », « profilé postérieur » et « profilés latéraux » est utilisée pour donner un nom concret à chacun des profilés. Comme conventionnalisme, on comprendra dans ce document que le profilé antérieur est celui qui est le plus en avant selon le sens de déploiement, puisque chaque élément est destiné à constituer un élément coulissant dans une pergola.

On comprendra par « hauteur du profilé », tel qu'il a été indiqué, la distance entre les deux surfaces qui le limitent en partie supérieure et en partie inférieure. Cette hauteur est mesurée dans le même sens que l'épaisseur du panneau. Ce sens de mesure de la hauteur sera donc perpendiculaire au plan défini par le panneau qui est fixé aux profilés.

Le panneau est fixé au profilé postérieur, néanmoins il n'est pas fixé à son point moyen, mais il y a un décentrement en hauteur. Ce décentrement est utile pour concevoir mécaniquement le profilé, pouvant augmenter son moment d'inertie, de sorte à supporter de plus grandes forces de flexion et à pouvoir avoir une longueur plus importante.

Dans certaines réalisations particulières, les profilés antérieur, postérieur et latéraux sont reliés deux par deux au moyen de pièces de liaison en forme de parallélépipède, de sorte que chaque pièce de liaison reçoive deux de ces profilés.

Ces pièces de liaison sont plus simples à fabriquer et plus robustes que les pièces traditionnelles sous forme d'onglet, ce qui évite de réaliser des coupes à 45°. En outre, ces pièces de liaison agissent à la manière d'une butée de poussées entre panneaux consécutifs, parce qu'elles font légèrement saillie des profilés, puisque, comme ce sont des pièces dans lesquelles les profilés sont introduits, leur largeur est légèrement supérieure.

Selon l'invention, l'élément comprend en outre une pluralité de paliers disposés sur les pièces de liaison, aptes à permettre le coulissement de l'élément par rapport à un rail.

Selon l'invention, le panneau est plus proche de la surface supérieure du profilé postérieur que de la surface inférieure du profilé postérieur. Dans ces réalisations, l'excédent inférieur est plus grand que l'excédent supérieur, ce qui permet à la hauteur entre les différents éléments coulissants de pouvoir être plus petite, puisque l'excédent supérieur est celui qui limite la distance entre les éléments coulissants contigus.

Selon l'invention, le panneau est sensiblement rectangulaire, de sorte que la longueur du côté fixé au profilé antérieur est plus importante que 3 fois la longueur du côté fixé à un profilé latéral. Ce rapport d'aspect permet des surfaces couvertes beaucoup plus amples et diaphanes, augmentant l'utilité de la pergola.

Dans certaines réalisations particulières, le panneau est fait en polycarbonate. Ce matériau, pour ses propriétés mécaniques, est particulièrement apte à la fabrication des panneaux, pouvant fournir une résistance à son poids et aux éléments qu'il supporte (pluie, neige, grêle) et facilitant le passage de la lumière du soleil à travers lui.

Dans d'autres réalisations particulières, le panneau est un panneau photovoltaïque ou est un panneau opaque. Ces réalisations ont d'autres avantages, comme l'exploitation de l'énergie ou la provision d'un espace avec de l'ombre les jours où la lumière du soleil dérange.

Dans certaines réalisations particulières, l'élément comprend en outre un profilé de collecte des eaux fixé au profilé antérieur et parallèle à celui-ci, le profilé de collecte des eaux étant configuré pour collecter l'eau de pluie et la diriger vers les profilés latéraux.

Selon l'invention, l'épaisseur du panneau est comprise entre 2,8 et 3,2 cm, le profilé postérieur a une hauteur comprise entre 6 et 7 cm et le profilé antérieur a une hauteur comprise entre 3,5 et 4,5 cm.

Selon l'invention, la pergola comprend un profilé principal antérieur, un profilé principal postérieur, deux profilés principaux latéraux, un élément fixe fixé au profilé principal postérieur et une pluralité d'éléments coulissants selon le premier aspect inventif. Chaque élément coulissant comprend un ensemble de paliers configurés pour déplacer l'élément coulissant le long des profilés principaux latéraux.

Cette pergola a l'avantage de pouvoir avoir une largeur beaucoup plus importante que les pergolas connues dans l'état de l'art, étant donné qu'elle comprend un élément coulissant selon ce qui a été décrit ci-dessus.

Cette pergola peut être fixée au mur d'une maison. Dans certains cas, ce sera le profilé principal postérieur qui sera fixé à la maison, le déploiement des éléments coulissants se produisant dans un sens d'éloignement du mur. Dans d'autres cas, ce sera le profilé principal latéral qui sera fixé à la maison, le déploiement des éléments se produisant dans un sens parallèle au mur.

Dans certaines réalisations, la pergola comprend en outre un moteur tubulaire destiné à agir sur au moins l'un des éléments coulissants. Dans ces réalisations, le déploiement des éléments coulissants est réalisé sans aucun effort par l'utilisateur, les éléments coulissants pouvant même être hors de portée de l'utilisateur, des hauteurs plus grandes dans l'espace couvert par la pergola étant ainsi obtenues.

Dans certaines réalisations particulières, au moins l'un des deux profilés principaux latéraux comprend en outre un profilé de collecte des eaux fixé audit profilé principal latéral et parallèle à celui-ci, le profilé de collecte des eaux étant configuré pour collecter l'eau de pluie et la diriger vers les profilés principaux antérieur et postérieur.

Dans certaines réalisations, la pergola comprend en outre un mécanisme de crémaillère ancrée au profilé de collecte des eaux, destinée à tendre la courroie du moteur tubulaire.

Ce mécanisme de crémaillère comprend une vis sans fin, un écrou carré et deux pièces dentées qui peuvent se déplacer librement le long de la vis sans fin. Lorsque la vis sans fin tourne, l'écrou carré déplace l'une des deux pièces dentées, variant sa distance par rapport à l'autre pièce dentée. On obtient ainsi une tension simple de la courroie du moteur tubulaire.

Dans certaines réalisations particulières, la pergola comprend en outre des moyens de pivotement qui comprennent une première pièce de pivotement fixée au profilé principal postérieur et une deuxième pièce de pivotement, complémentaire à la première pièce de pivotement, fixée au panneau fixe.

Ces moyens de pivotement ont pour fonction de permettre la configuration des éléments coulissants avec différents angles par rapport au profilé principal postérieur.

Dans certaines réalisations particulières, le profilé principal antérieur comprend aussi un deuxième panneau primaire fixé au profilé principal antérieur et un deuxième moteur tubulaire.

Cette configuration permet le déploiement des éléments coulissants depuis deux extrémités différentes de la pergola, de sorte que le nombre d'éléments coulissants de chaque côté soit plus petit.

Dans certaines réalisations particulières, la pergola comprend des connecteurs plastiques entre les profilés principaux latéraux et les profilés principaux antérieur et postérieur, les connecteurs plastiques étant configurés pour résister aux chocs et aux vibrations.

### BRÈVE DESCRIPTION DES DESSINS

Pour compléter la description et afin de faciliter une meilleure compréhension de l'invention, le jeu de figures suivant est fourni. Lesdites figures font partie intégrante de la description, et illustrent un ou plusieurs exemples particuliers, qui ne devraient pas être interprétés comme si elles limitaient le champ de protection de l'invention, mais simplement comme un exemple de la manière dont l'invention peut être mise en oeuvre. Ce jeu comprend les figures suivantes :
La Figure 1 montre une vue générale en perspective d'un exemple particulier de pergola selon l'invention, dans la position dans laquelle les éléments coulissants sont repliés. Dans ce cas le sens de pliage et de déploiement est un sens légèrement incliné.
La Figure 2 montre la pergola de la figure 1, dans laquelle les éléments coulissants ont été déployés.
La Figure 3 montre une vue en perspective de certains éléments d'une pergola selon l'invention.
La Figure 4 montre une vue en perspective de certains éléments d'une pergola selon l'invention.
La Figure 5 montre une vue latérale en coupe de certains éléments d'une pergola selon l'invention.
La Figure 6 montre une vue frontale en coupe de certains éléments d'une pergola selon l'invention.
La Figure 7 montre une vue latérale en coupe de certains éléments d'une pergola selon l'invention.
La Figure 8 montre une vue latérale en coupe de certains éléments de la pergola de la figure antérieure.
La Figure 9 montre une vue latérale en coupe d'éléments coulissants d'une pergola selon l'invention en train d'être déployés.
La Figure 10 montre une vue latérale en coupe de certains éléments de la pergola de la figure antérieure.
La Figure 11 et la Figure 12 montrent les détails de la crémaillère de réglage.
La Figure 13 montre une vue en perspective d'un exemple particulier d'une pergola selon l'invention.
La Figure 14 montre la pergola de la figure 13, dans laquelle les éléments coulissants ont été déployés.
La Figure 15 montre une vue en perspective d'un exemple particulier d'une pergola selon l'invention.
La Figure 16 montre la pergola de la figure 15, dans laquelle les éléments coulissants ont été déployés.

### DESCRIPTION DÉTAILLÉE DE L'INVENTION

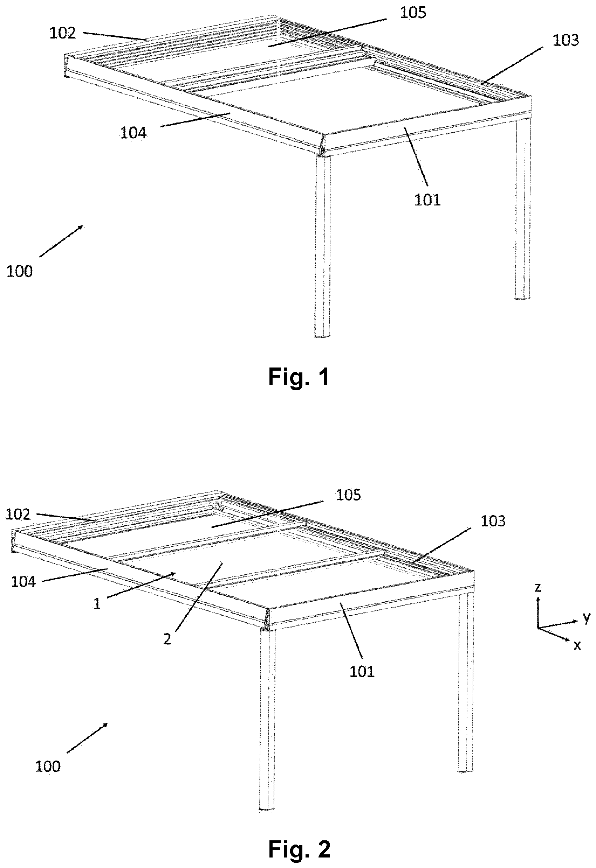

La Figure 1 montre une vue générale en perspective d'un exemple particulier de pergola 100 selon l'invention. Cette pergola 100 comprend les éléments suivants :
un profilé principal antérieur 101 ;
un profilé principal postérieur 102 ;
deux profilés principaux latéraux 103, 104 ;
un élément fixe 105 fixé au profilé principal postérieur 102 ;
deux éléments coulissants 1 configurés pour être déployés le long des profilés principaux latéraux 103, 104.

La figure 2 montre la pergola de la figure 1, dans laquelle les éléments coulissants 1 ont été déployés, de sorte à couvrir la surface de la pergola. Dans le cas particulier de la pergola 100 montrée dans les figures 1 et 2, le profilé principal postérieur 102 est celui qui est destiné à être fixé au mur d'une maison, de sorte que le déploiement se produise depuis le profilé principal postérieur 102 vers le profilé principal antérieur 101, dans le sens d'éloignement du mur de la maison, dans ce cas un sens incliné.

Dans cette figure on observe comment le panneau 2 de l'élément coulissant 1 est sensiblement rectangulaire, de sorte que la longueur du côté parallèle au profilé principal antérieur soit plus importante que 2 fois la longueur du côté parallèle aux profilés principaux latéraux.

Au vu de cette figure, on peut définir des sens qui servent à une meilleure clarté et compréhension dans la description du reste des figures.

Le sens longitudinal X est défini comme le sens de déploiement, et est celui qui part du profilé principal postérieur 102 vers le profilé principal antérieur 101, et est donc parallèle aux profilés principaux latéraux 103, 104.

Dans cette réalisation, le sens horizontal Y est le sens parallèle aux profilés principaux antérieur et postérieur. Il est donc perpendiculaire au sens longitudinal.

Le sens vertical Z est le sens perpendiculaire aux deux autres. Le sens Z coïncidera avec le sens vertical si la pergola n'a pas d'inclinaison.

Les sens ont été choisis pour que le dièdre x, y, z soit direct.

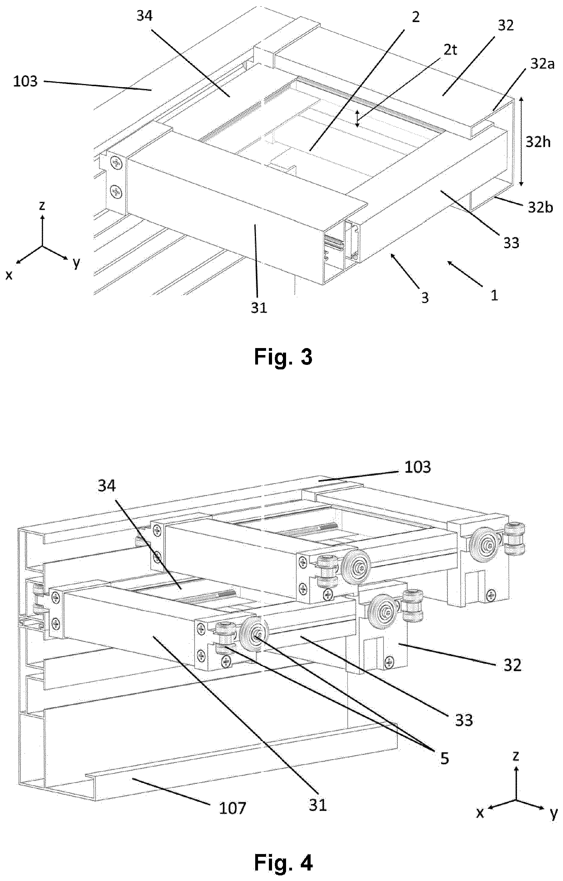

La figure 3 montre une vue en perspective de l'élément coulissant 1 monté sur l'un des profilés principaux latéraux 103 d'une pergola selon l'invention. Le reste de profilés latéraux a été éliminé pour une meilleure appréciation des parties de l'élément coulissant 1.

On observe sur cette figure certaines caractéristiques des éléments coulissants. Chaque élément coulissant 1 est constitué d'un panneau 2 à épaisseur constante 2t et d'un cadre de panneau 3. Le cadre de panneau comprend un profilé antérieur 31, un profilé postérieur 32 et deux profilés latéraux (qui ne sont pas représentés sur cette figure). Le panneau 2 est fixé aux profilés antérieur 31, postérieur 32 et latéraux. Le profilé postérieur 32 a une hauteur 32h plus importante que le double de l'épaisseur du panneau 2t. En outre, on peut apprécier comment le panneau 2 est plus proche de la surface supérieure du profilé postérieur que de la surface inférieure du profilé postérieur.

On peut apprécier comment le profilé postérieur de l'élément coulissant 1 a une surface supérieure 32a et une surface inférieure 32b. Donc, la hauteur 32h est la distance entre la surface supérieure 32a et la surface inférieure 32b, la hauteur 32h étant mesurée dans le même sens que l'épaisseur du panneau.

Outre le fait que la hauteur du profilé postérieur est considérablement plus importante que l'épaisseur du panneau, il existe un excédent en hauteur au-dessus du panneau et un excédent en hauteur en dessous du panneau. L'excédent en hauteur au-dessus du panneau est destiné à tirer sur l'élément coulissant qui est au-dessus du panneau et l'excédent en dessous est destiné à être entraîné par l'excédent au-dessus de l'élément coulissant suivant. Cet excédent est aussi destiné selon l'invention à constituer une section d'inertie géométrique élevée qui garantit une résistance à la flexion suffisante du profilé postérieur.

La figure 4 montre désormais une vue en perspective de la pergola dans laquelle seul un des profilés principaux latéraux a été éliminé, l'autre profilé principal latéral 103 restant. On obtient ainsi une autre vue différente de la disposition interne des éléments mentionnés dans la description de la figure antérieure.

On observe dans cette figure comment chaque élément coulissant 1 comprend un ensemble de paliers 5 configurés pour guider correctement l'élément coulissant 1 le long des profilés latéraux principaux, dans le sens longitudinal.

On observe aussi sur cette figure comment le profilé principal latéral 103 dispose d'un profilé de collecte des eaux 107 fixé audit profilé principal latéral 103 et parallèle à celui-ci, le profilé de collecte des eaux 107 étant configuré pour collecter l'eau de pluie et la diriger vers les profilés principaux antérieur et postérieur (non représentés sur cette figure).

En général, la hauteur du profilé postérieur est destinée à doter à l'élément coulissant d'un moment d'inertie plus grand, supportant ainsi un moment de flexion plus grand sans déformations pouvant mettre en danger la stabilité de la pergola. En outre, la configuration décrite permet aussi au profilé antérieur d'un élément coulissant d'appuyer sur les profilés latéraux de l'élément coulissant suivant lorsque les deux sont déployés, et aux profilés latéraux d'un élément coulissant de s'appuyer sur le profilé postérieur de l'élément coulissant suivant, dotant à l'ensemble d'une plus grande rigidité.

Un autre détail supplémentaire qui est observé dans cette figure est que les différents profilés 31, 32, 33, 34 qui forment le cadre de panneau sont reliés au moyen de pièces de liaison 35 avec une forme de parallélépipède, de sorte que chacune de ces pièces de liaison reçoive deux des profilés. Ces pièces de liaison sont plus simples à fabriquer et plus robustes que les pièces traditionnelles sous forme d'onglet, ce qui évite de réaliser des coupes à 45°.

Ces pièces de liaison ont trois missions distinctes : d'une part, elles relient les profilés susmentionnés ; d'autre part, elles font office de butée de poussées entre panneaux consécutifs et en dernier lieu elles servent de support pour placer les roues de guidage. Elles réalisent la deuxième fonction parce qu'elles font légèrement saillie des profilés, puisque, comme ce sont des pièces dans lesquelles les profilés sont introduits, leur largeur est légèrement supérieure. Cela permet leur fonction comme butées.

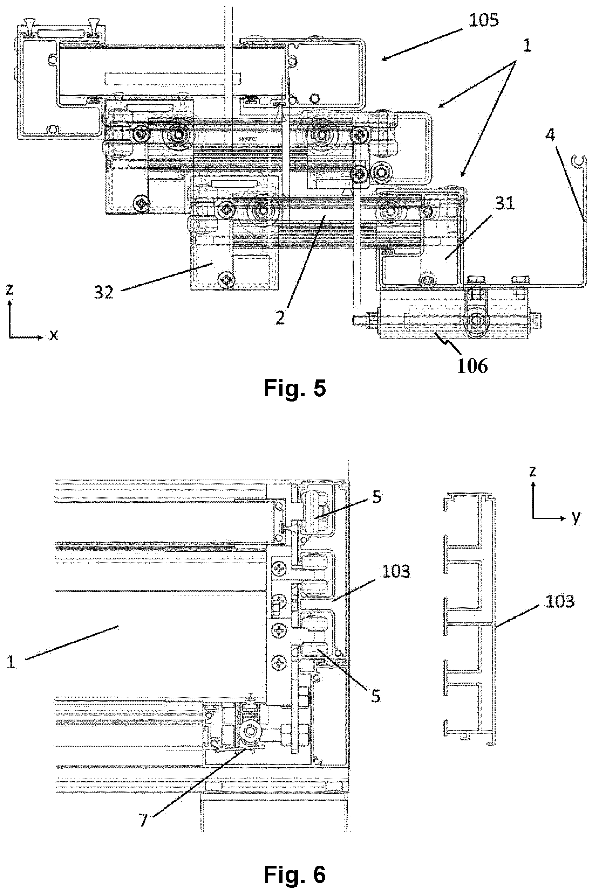

La figure 5 montre une vue latérale, selon le sens horizontal, dans laquelle les profilés principaux latéraux ont été éliminé pour que les éléments s'y trouvant puissent être observés.

On peut voir sur cette image l'élément fixe 105 et deux éléments coulissants 1. On apprécie parfaitement sur cette figure comment le panneau 2 est excentré en hauteur par rapport au profilé postérieur 32, de sorte que l'excédent supérieur entraîne l'élément coulissant 1 ultérieur et l'excédent inférieur dote à l'élément coulissant d'un moment d'inertie élevé.

On observe également sur cette figure un profilé de collecte des eaux 4 fixé au profilé antérieur 31 de l'élément coulissant 1, et parallèle à celui-ci, le profilé de collecte des eaux 4 étant configuré pour collecter l'eau de pluie et la diriger vers les profilés latéraux (non représentés sur cette figure).

La figure 6 montre une vue en coupe de la pergola selon le sens longitudinal. On apprécie la forme du profilé principal latéral 103 sur cette vue, qui loge les éléments coulissants 1 et leurs paliers correspondants 5. Le profilé principal latéral 103 est reproduit à droite, pour une meilleure observation de ses caractéristiques.

On observe aussi sur cette figure un élément antiblocage 7 destiné à éviter que la courroie de transmission n'interfère avec elle-même, dû au fait qu'elle soit fermée et dentée dans sa partie intérieure.

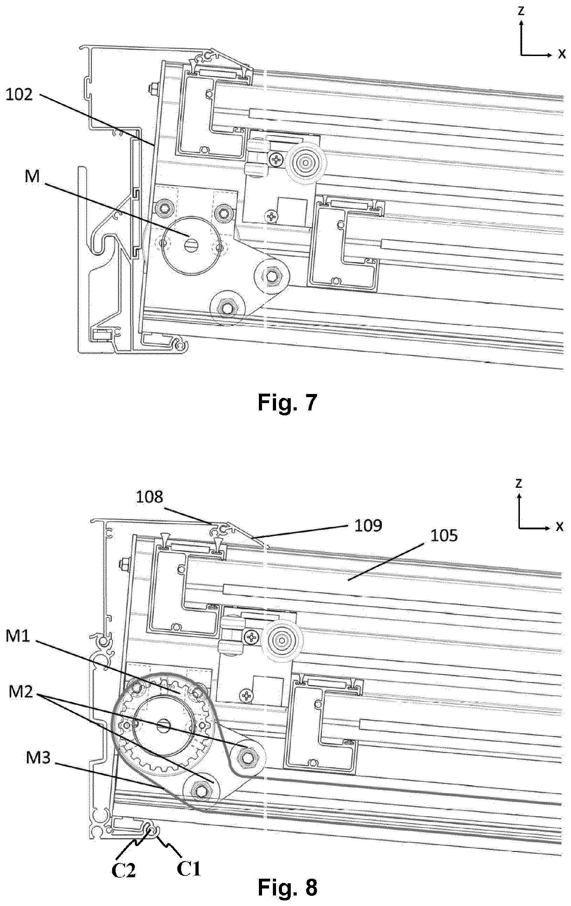

La figure 7 montre une vue en coupe selon un plan perpendiculaire au sens horizontal de la zone du profilé principal postérieur 102.

On apprécie sur cette figure la position de l'axe du moteur tubulaire M destiné à agir sur l'élément coulissant.

Sur la figure 8 le couvercle du dispositif d'actionnement a été démonté partiellement, de sorte à pouvoir mieux apprécier les éléments qui le composent : une roue dentée M1, des poulies de renvoi M2 et une courroie de transmission M3 chargée de transmettre le mouvement généré dans le moteur M à une pièce d'entraînement située dans le premier des panneaux (non montré dans cette figure).

Sur cette figure on apprécie aussi comment la pergola comprend en outre des moyens de pivotement qui comprennent une première extrémité de pivotement C1 qui fait partie du profilé principal postérieur et une forme complémentaire C2 solidaire du cadre de la pergola, de sorte que C1 et C2 forment une articulation cylindrique. Cela permet d'ajuster l'inclinaison de la pergola. Sur la partie supérieure il est prévu un couvercle 109, qui est articulé avec l'extrémité supérieure 108 du profilé de fixation postérieur principal 102.

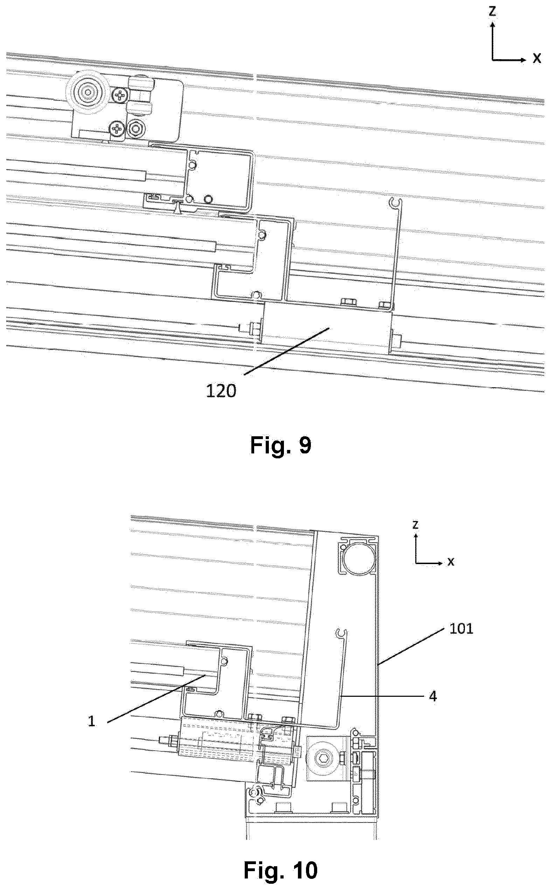

Sur la figure 9 on observe les éléments coulissants 1 dans leur position rentrée. Sur cette figure on observe aussi la pièce d'entraînement 120 destinée à transmettre le mouvement du moteur tubulaire à l'élément coulissant 1 qui est déployé en premier lieu.

Sur cette figure on observe aussi comment les profilés antérieurs sont étroits, étant donné qu'ils s'appuient sur le panneau précédent ; ils ne nécessitent pas d'avoir une plus grande hauteur, à la différence du profilé postérieur qui, tel qu'il est observé, par exemple, sur la figure 8, ne s'appuie sur rien, de là sa plus grande hauteur.

Sur la figure 10 on observe l'élément coulissant 1 qui est totalement déployé et a atteint le profilé principal antérieur 101. On observe sur cette figure comment le profilé de collecte des eaux 4 parvient à se situer sous la projection du profilé principal antérieur 101.

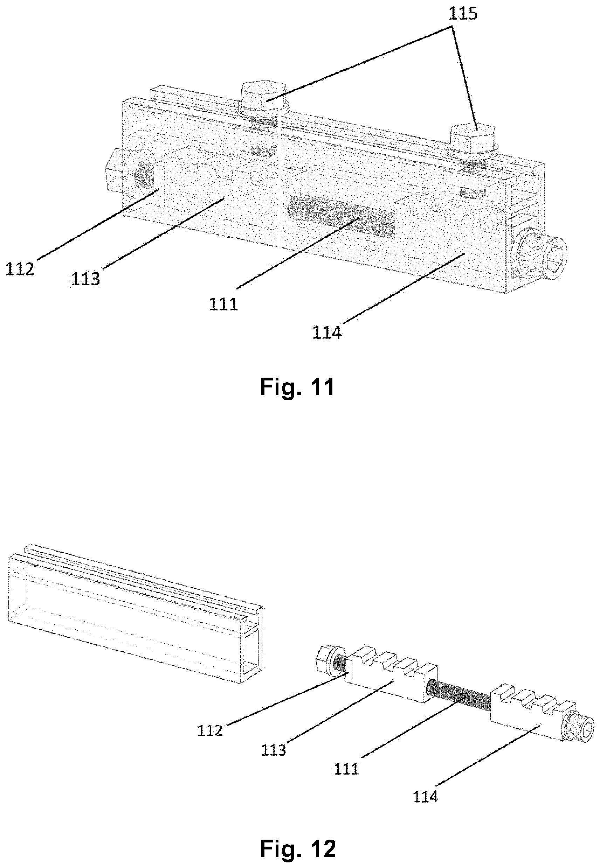

Les figures 11 et 12 montrent un mécanisme de crémaillère destiné à tendre la courroie du moteur tubulaire 106. Ce mécanisme de crémaillère comprend une vis sans fin 111, un écrou carré 112 et deux pièces dentées 113, 114. Les pièces dentées 113, 114 peuvent se déplacer librement le long de la vis sans fin, limitées par la position de l'écrou carré 112. Lorsque la courroie du moteur tubulaire est placée en correspondance avec les pièces dentées et que la vis sans fin tourne, l'écrou carré 112 fait pression sur l'une des pièces dentées, diminuant la distance entre elles et la tension de la courroie se produisant. Ce mécanisme comprend en outre deux vis 115 pour le relier au profilé de collecte des eaux, tel que l'on peut voir sur la figure 10. Les vis fonctionnent avec des plaques filetées qui permettent d'ajuster sa position relative.

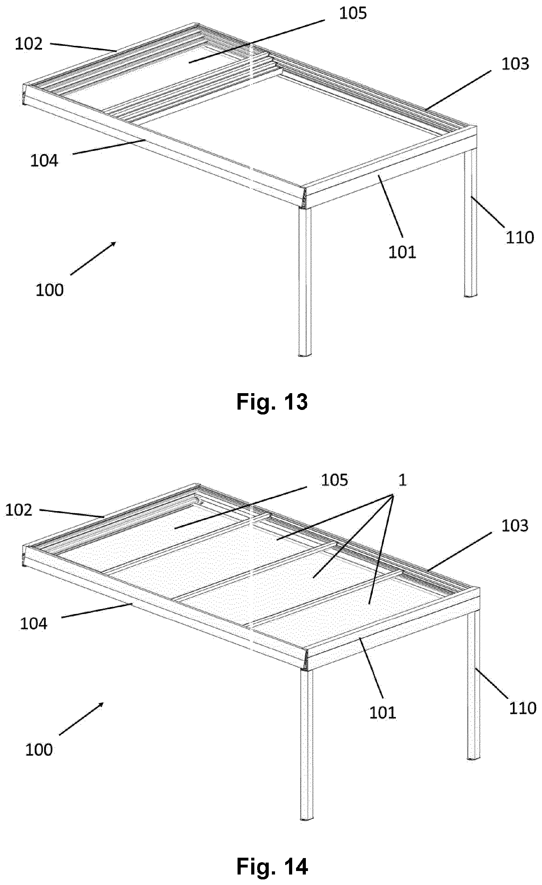

Les figures 13 à 16 montrent des vues générales en perspective d'exemples différents de réalisation de pergolas selon l'invention.

Sur les figures 13 et 14 on montre une pergola similaire à celle montrée sur les figures 1 et 2, mais où il existe plus d'éléments coulissants 1. Le nombre d'éléments coulissants dépendra de la longueur à couvrir, et exigera des profilés principaux 101, 102, 103, 104 plus gros, pour fournir des rails pour le coulissement des éléments coulissants. La figure 14 montre la pergola de la figure 13 en position déployée.

Cette pergola est conçue pour être reliée au mur d'une maison par le profilé principal postérieur 102, puisqu'elle ne possède que des colonnes 110 dans le profilé principal antérieur 101.

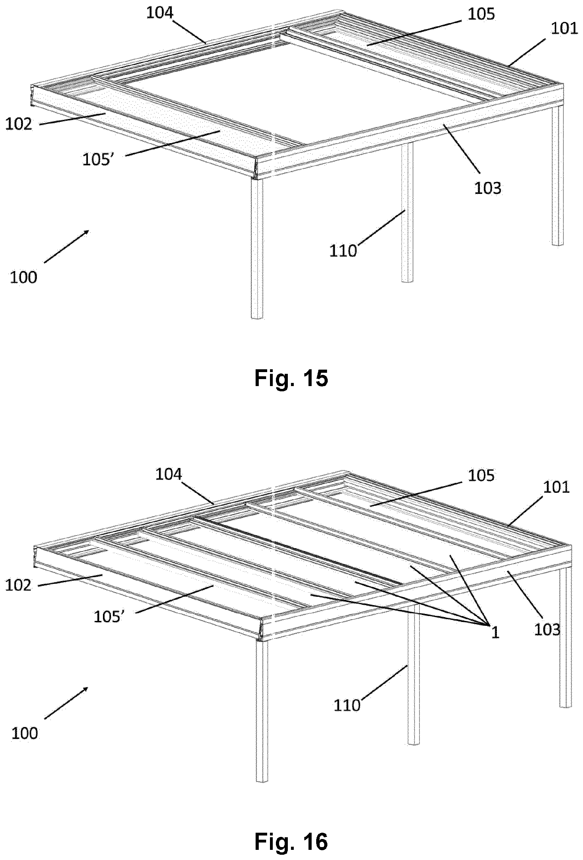

Sur les figures 15 et 16 on peut voir une autre réalisation différente qui offre certaines variantes par rapport aux options montrées sur les figures 1, 2, 13 et 14.

Dans ce cas, il s'agit d'une pergola dans laquelle il existe deux éléments fixes 105, 105', l'un fixé au profilé principal antérieur 101 et l'autre fixé au profilé principal postérieur 102. Ainsi, le déploiement des éléments coulissants 1 se produit autant depuis le profilé principal antérieur 101 que depuis le profilé principal postérieur 102, réduisant ainsi le nombre d'éléments coulissants nécessaires de chaque côté et, donc, le nombre de rails qui doit être fourni dans les profilés principaux latéraux. Dans ce cas, on fournirait un deuxième moteur tubulaire pour déplacer l'autre moitié des éléments coulissants.

Une autre différence est que les colonnes 110 sont mises sur un profilé principal latéral, de sorte que l'autre profilé principal latéral soit celui qui est destiné à être fixé au mur d'une maison. Le déploiement dans ce cas se produit dans un sens parallèle audit mur, au lieu de se produire dans le sens perpendiculaire, comme c'était le cas des réalisations des figures 1, 2, 13 et 14.

La pergola comprend des connecteurs plastiques entre les profilés principaux latéraux et les profilés principaux antérieur et postérieur, les connecteurs plastiques étant configurés pour résister aux chocs et aux vibrations.

## Revendications

1. Pergola (100) comprenant:
un profilé principal antérieur (101) ;
un profilé principal postérieur (102) ;
deux profilés principaux latéraux (103, 104) ;
un élément fixe (105) fixé au profilé principal postérieur (102) ;
une pluralité d'éléments coulissants (1), chaque élément coulissant (1) comprenant un ensemble de paliers (5) configurés pour déplacer l'élément coulissant (1) le long des profilés principaux latéraux (103, 104),
dans laquelle chaque élément coulissant (1) est constitué d'un panneau (2) à épaisseur constante (2t) et d'un cadre de panneau (3), le cadre de panneau (3) comprenant un profilé antérieur (31), un profilé postérieur (32), deux profilés latéraux (33, 34), le panneau (2) étant fixé aux profilés antérieur (31), postérieur (32) et latéraux (33, 34),
le profilé postérieur (32) a une surface supérieure (32a) et une surface inférieure (32b), le panneau étant sensiblement rectangulaire, de sorte que la longueur du côté fixé au profilé antérieur est plus importante que 3 fois la longueur du côté fixé à un profilé latéral et le profilé antérieur ayant une hauteur inférieure au profilé postérieur, **caractérisée en ce que** l'épaisseur du panneau est comprise entre 2,8 et 3,2 cm, le profilé postérieur a une hauteur comprise entre 6 et 7 cm et le profilé antérieur a une hauteur comprise entre 3,5 et 4,5 cm, la hauteur (32h) étant la distance entre la surface supérieure (32a) et la surface inférieure (32b), et la hauteur (32h) étant mesurée dans le même sens que l'épaisseur du panneau (2t) ; **en ce que** le filé antérieur s'appuie sur le panneau précédent ; et **en ce que**
le panneau (2) est excentré en hauteur par rapport au profilé postérieur (32), le panneau (2) étant plus proche de la surface supérieure du profilé postérieur que de la surface inférieure du profilé postérieur.

2. Pergola (100) selon la revendication 1, dans lequel les profilés antérieur (31), postérieur (32) et latéraux (33, 34) sont reliés deux à deux au moyen de pièces de liaison en forme de parallélépipède, de sorte que chaque pièce de liaison reçoive deux de ces profilés.

3. Pergola (100) selon la revendication 2, qui comprend en outre une pluralité de paliers (5) disposés sur les pièces de liaison, aptes à permettre le coulissement de l'élément (1) par rapport à un rail.

4. Pergola (100) selon l'une quelconque des revendications précédentes, dans lequel le panneau (2) est fait en polycarbonate.

5. Pergola (100) selon l'une quelconque des revendications 1 à 3, dans lequel le panneau (2) comprend des cellules photovoltaïques.

6. Pergola (100) selon l'une quelconque des revendications 1 à 3, dans lequel le panneau (2) est opaque.

7. Pergola (100) selon l'une quelconque des revendications précédentes, qui comprend en outre un profilé de collecte des eaux (4) fixé au profilé antérieur (31) et parallèle à celui-ci, le profilé de collecte des eaux (4) étant configuré pour collecter l'eau de pluie et la diriger vers les profilés latéraux (33, 34).

8. Pergola (100) selon la revendication 1, qui comprend en outre un moteur tubulaire (M) destiné à agir sur au moins l'un des éléments coulissants (1).

9. Pergola (100) selon l'une quelconque des revendications 1 ou 8, dans laquelle au moins l'un des deux profilés principaux latéraux (103, 104) comprend en outre un profilé de collecte des eaux (107) fixé audit profilé principal latéral et parallèle à celui-ci, le profilé de collecte des eaux étant configuré pour collecter l'eau de pluie et la diriger vers les profilés principaux antérieur et postérieur (101, 102).

10. Pergola (100) selon la revendication 9 lorsqu'elle dépend de la revendication 8, qui comprend en outre un mécanisme de crémaillère (106) ancrée au profilé de collecte des eaux, destinée à tendre la courroie du moteur tubulaire.

11. Pergola (100) selon l'une quelconque des revendications 8 à 10, qui comprend en outre des moyens de pivotement qui comprennent une première pièce de pivotement fixée au profilé principal postérieur et une deuxième pièce de pivotement, complémentaire à la première pièce de pivotement, fixée au panneau fixe.

12. Pergola (100) selon l'une quelconque des revendications 8 à 11 qui comprend des connecteurs plastiques entre les profilés principaux latéraux et les profilés principaux antérieur et postérieur, les connecteurs plastiques étant configurés pour résister aux chocs et aux vibrations.

## Patentansprüche

1. Pergola (100), umfassend:
ein vorderes Hauptprofil (101);
ein hinteres Hauptprofil (102);
zwei seitliche Hauptprofile (103, 104);
ein feststehendes Element (105), das an dem hinteren Hauptprofil (102) befestigt ist;
eine Vielzahl von Gleitelementen (1), jedes Gleitelement (1) umfassend einen Satz von Lagern (5), die konfiguriert sind, um das Gleitelement (1) entlang der seitlichen Hauptprofile (103, 104) zu bewegen,
wobei
jedes Schiebeelement (1) aus einer Platte (2) mit konstanter Stärke (2t) und einem Plattenrahmen (3) besteht, wobei der Plattenrahmen (3) ein vorderes Profil (31), ein hinteres Profil (32), zwei seitliche Profile (33, 34) umfasst, wobei die Platte (2) an dem vorderen Profil (31), dem hinteren Profil (32) und den seitlichen Profilen (33, 34) befestigt ist,
das hintere Profil (32) eine obere Fläche (32a) und eine untere Fläche (32b) aufweist, wobei die Platte im Wesentlichen rechteckig ist, sodass die Länge der Seite, die an dem vorderen Profil befestigt ist, größer ist als das 3-fache der Länge der Seite, die an einem seitlichen Profil befestigt ist, und das vordere Profil eine geringere Höhe als das hintere Profil aufweist, **dadurch gekennzeichnet, dass** die Stärke der Platte zwischen 2,8 und 3,2 cm liegt, das hintere Profil eine Höhe zwischen 6 und 7 cm aufweist und das vordere Profil eine Höhe zwischen 3,5 und 4,5 cm aufweist,
wobei die Höhe (32h) der Abstand zwischen der oberen Fläche (32a) und der unteren Fläche (32b) ist, und wobei die Höhe (32h) in derselben Richtung wie die Stärke der Platte (2t) gemessen wird; dass das vordere Profil auf der vorherigen Platte aufliegt; und dass
die Platte (2) in der Höhe exzentrisch in Bezug auf das hintere Profil (32) ist, wobei die Platte (2) näher an der oberen Fläche des hinteren Profils ist als an der unteren Fläche des hinteren Profils.

2. Pergola (100) nach Anspruch 1, wobei das vordere (31), hintere (32) und seitliche (33, 34) Profil paarweise mittels quaderförmigen Verbindungsstücken verbunden sind, sodass jedes Verbindungsstück zwei dieser Profile aufnimmt.

3. Pergola (100) nach Anspruch 2, die ferner eine Vielzahl von Lagern (5) umfasst, die an den Verbindungsstücken angeordnet und geeignet sind, das Gleiten des Elements (1) in Bezug auf eine Schiene zu ermöglichen.

4. Pergola (100) nach einem der vorherigen Ansprüche, wobei die Platte (2) aus Polycarbonat gefertigt ist.

5. Pergola (100) nach einem der Ansprüche 1 bis 3, wobei die Platte (2) photovoltaische Zellen umfasst.

6. Pergola (100) nach einem der Ansprüche 1 bis 3, wobei die Platte (2) lichtundurchlässig ist.

7. Pergola (100) nach einem der vorherigen Ansprüche, die ferner ein Wassersammelprofil (4) umfasst, das an dem vorderen Profil (31) befestigt ist und parallel dazu ist, wobei das Wassersammelprofil (4) konfiguriert ist, um Regenwasser zu sammeln und es zu den seitlichen Profilen (33, 34) zu leiten.

8. Pergola (100) nach Anspruch 1, die ferner einen rohrförmigen Motor (M) umfasst, der dazu bestimmt ist, auf mindestens eines der Gleitelemente (1) einzuwirken.

9. Pergola (100) nach einem der Ansprüche 1 oder 8, wobei
mindestens eines der zwei seitlichen Hauptprofile (103, 104) ferner ein Wassersammelprofil (107) umfasst, das an dem seitlichen Hauptprofil befestigt ist und parallel dazu ist, wobei das Wassersammelprofil konfiguriert ist, um Regenwasser zu sammeln und es zu dem vorderen und hinteren Hauptprofil (101, 102) zu leiten.

10. Pergola (100) nach Anspruch 9, wenn abhängig von Anspruch 8, die ferner einen Zahnstangenmechanismus (106) umfasst, der an dem Wassersammelprofil verankert und dazu bestimmt ist, den Riemen des rohrförmigen Motors zu spannen.

11. Pergola (100) nach einem der Ansprüche 8 bis 10, die ferner Schwenkeinrichtungen umfasst, die ein erstes Schwenkteil, das an dem hinteren Hauptprofil befestigt ist, und ein zweites Schwenkteil, das komplementär zu dem ersten Schwenkteil ist und an der feststehenden Platte befestigt ist, umfassen.

12. Pergola (100) nach einem der Ansprüche 8 bis 11, die Kunststoffverbinder zwischen den seitlichen Hauptprofilen und dem vorderen und dem hinteren Hauptprofil umfasst, wobei die Kunststoffverbinder konfiguriert sind, um Stößen und Vibrationen zu widerstehen.

## Claims

1. A pergola (100) comprising:
a front main profile (101);
a rear main profile (102);
two side main profiles (103, 104);
a fixed element (105) secured to the rear main profile (102) ;
a plurality of sliding elements (1), each sliding element (1) comprising a set of bearings (5) configured to move the sliding element (1) along the side main profiles (103, 104), wherein each sliding element (1) is formed by a panel (2) of constant thickness (2t) and a panel frame (3), the panel frame (3) comprising a front profile (31), a rear profile (32), two side profiles (33, 34), the panel (2) being secured to the front (31), rear (32) and side profiles (33, 34),
the rear profile (32) has an upper surface (32a) and a lower surface (32b), the panel being substantially rectangular, so that the length of the side secured to the front profile is greater than 3 times the length of the side secured to a side profile, and the front profile having a height smaller than the rear profile, **characterized in that** the thickness of the panel is between 2.8 and 3.2 cm, the rear profile has a height of between 6 and 7 cm and the front profile has a height of between 3.5 and 4.5 cm,
the height (32h) being the distance between the upper surface (32a) and the lower surface (32b), and the height (32h) being measured in the same direction as the thickness of the panel (2t); **in that** the front profile bears against the preceding panel; and **in that** the panel (2) is vertically offset relative to the rear profile (32), the panel (2) being closer to the upper surface of the rear profile than to the lower surface of the rear profile.

2. The pergola (100) according to claim 1, wherein the front (31), rear (32) and side (33, 34) profiles are connected in pairs by means of parallelepiped-shaped connecting pieces, so that each connecting piece receives two of these profiles.

3. The pergola (100) according to claim 2, which further comprises a plurality of bearings (5) arranged on the connecting pieces, operable to allow the element (1) to slide along a rail.

4. The pergola (100) according to any of the preceding claims, wherein the panel (2) is made of polycarbonate.

5. The pergola (100) according to any one of claims 1 to 3, wherein the panel (2) comprises photovoltaic cells.

6. The pergola (100) according to any one of claims 1 to 3, wherein the panel (2) is opaque.

7. The pergola (100) according to any of the preceding claims, which further comprises a water-collection profile (4) secured to and extending parallel to the front profile (31), the water-collection profile (4) being configured to collect rainwater and direct it towards the side profiles (33, 34).

8. The pergola (100) according to claim 1, further comprising a tubular motor (M) for acting on at least one of the sliding elements (1).

9. The pergola (100) according to any one of claims 1 or 8, wherein at least one of the two main side profiles (103, 104) further comprises a water-collection profile (107) secured to and extending parallel to said main side profile, the water-collection profile being configured to collect rainwater and direct it towards the front and rear main profiles (101, 102).

10. The pergola (100) according to claim 9 when dependent on claim 8, which further comprises a rack mechanism (106) anchored to the water-collection profile, for tensioning the belt of the tubular motor.

11. The pergola (100) according to any one of claims 8 to 10, which further comprises pivoting means which comprise a first pivoting piece secured to the rear main profile and a second pivoting piece, complementary to the first pivoting piece, secured to the fixed panel.

12. The pergola (100) according to any one of claims 8 to 11 which comprises plastic connectors between the side main profiles and the front and rear main profiles, the plastic connectors being configured to resist shocks and vibrations.
